# EUROPEAN PATENT APPLICATION

(11) **EP 2 278 680 A1**
(43) Date of publication of application: **26.01.2011**
(21) Application number: 09728015.0
(22) Date of filing: 25.03.2009
(51) Int. Cl.: H02J 7/00, H01M 10/46

(54) **CONTACTLESS CHARGING APPARATUS**

(30) Priority: 04.04.2008 JP 2008098087
(71) Applicant: Sharp Kabushiki Kaisha, Osaka-shi, Osaka 545-8522 (JP)
(72) Inventor: FUJIWARA, Yasuhito, Osaka 545-8522 (JP)
(74) Representative: Treeby, Philip David William
(86) International application number: PCT/JP2009/055879
(87) International publication number: WO 2009/122976

(57) **Abstract**

A contact less charging apparatus (10) comprises an electric power transmission coil (60), a plate member (30) and a spring (50). The plate member (30) is freely displaceable between a first position at which the plate member (30) is spaced from and above the electric power transmission coil (60) and a second position at which approach of a to-be-charged object (100) to the electric power transmission coil (60) is permitted, and at least an upper surface (31) of the plate member at the first position is slanted in relation to the horizontal plane. The spring (50) urges the plate member (30) from the second position toward the first position. The contactless charging apparatus (10), with the plate member (30) at the second position, charges the to-be-charged object (100) by means of electromagnetic induction.

## Description

### Technical Field

The present invention relates to a contactless charging apparatus for charging a to-be-charged object by means of electromagnetic induction.

### Background Art

In recent years, a number of contactless charging apparatus have been used as a charging apparatus for charging a to-be-charged object such as a portable handset of a cordless telephone (for example, refer to the patent literature 1) . Such a conventional contactless charging apparatus comprises an oscillator circuit connected to a commercial power supply, and an electric power transmission coil connected to the oscillator circuit. When the oscillator circuit applies an alternating voltage to the electric power transmission coil, the electric power transmission coil generates an alternating magnetic field.

Meanwhile, it is typical that a to-be-charged object comprises a power reception coil and a rechargeable battery. Upon charging, such a to-be-charged object is placed onto a mounting section of such a charging apparatus. To the mounting section is disposed an electric power transmission coil. When the to-be-charged object is placed onto the mounting section, the electric power transmission coil and the power reception coil come to face each other. Due to the alternating magnetic field generated from the electric power transmission coil, an alternating voltage attributable to electromagnetic induction is induced in the power reception coil. The alternating voltage that is induced is rectified in the power reception coil, and is used thereafter to charge a rechargeable battery.

### [Patent literature 1]

Japanese Patent Unexamined Publication No. 07-170312 bulletin

### Disclosure of Invention

### Problems to be Solved by the Invention

However, with those conventional contactless charging apparatus, when the to-be-charged object is not placed onto the mounting section of the charging apparatus, there is a risk that a foreign metallic substance such as coin happens to get on the mounting section. When a foreign metallic substance does get on the mounting section, there is a risk that abnormal temperature rise of the foreign metallic occurs due to electromagnetic induction heating.

The patent literature 1 describes a technique for restraining abnormal temperature rise of a foreign metallic substance due to electromagnetic induction heating, wherein the surface at which the electric power transmission coil and the power reception coil of the mounting section face each other is disposed vertically. In this technique, although restraining abnormal temperature rise of a foreign metallic substance due to electromagnetic induction heating can be expected when the foreign metallic substance gets on the mounting section in a manner that the foreign metallic substance lies down on the bottom face of the mounting section , abnormal temperature rise of the foreign metallic substance (s) due to electromagnetic induction heating cannot be restrained when the foreign metallic substance gets in the mounting section in a manner that the foreign metallic substance is standing, or when a plurality of foreign metallic substances pile up.

The present invention is directed to providing a contactless charging apparatus that can restrain abnormal temperature rise of a foreign metallic substance due to electromagnetic induction heating by a member provided thereto for restraining approach of the foreign metallic substance to an electric power transmission coil.

### Means for Solving Problem

A contactless charging apparatus of the present invention is the one adapted for charging a to-be-charged object by means of electromagnetic induction, and the apparatus comprises an oscillator circuit, an electric power transmission coil, a plate member, a housing, and an urging member. The electric power transmission coil generates an alternating magnetic field by an alternating voltage outputted from the oscillator circuit. The plate member is freely displaceable between a first position at which the plate member is spaced from and above the electric power transmission coil and a second position at which a to-be-charged object is permitted to get close to the electric power transmission coil, and at least an upper surface of the plate member at the first position is slanted in relation to the horizontal plane. The housing supports the plate member via a shaft, and a downstream portion of the housing disposed in downstream side of the plate member at the first position in direction of slant of the plate member does not protrude upwards in relation to the plate member. The urging member urges the plate member from the secondposition toward the first position, while allowing the plate member to be displaced to the second position by the weight of the to-be-charged object. The contactless charging apparatus charges the to-be-charged object with the plate member at the second position.

In this configuration, at the time of non-charging the plate member is disposed at the first position, and upon charging the plate member, resisting a biasing force of the urging member, is depressed to and disposed at the second position by the weight of the to-be-charged object . The plate member at the first position is spaced from and above the electric power transmission coil. When the plate member is at the first position, because the upper surface of the plate member is slanted in relation to the horizontal plane, a foreign metallic substance, even when it happens to drop onto the plate member, slides down from on the plate member to outside of the charging apparatus.

In the above described configuration, the plate member may be configured, at the second position at the time of charging, so as to hold the to-be-charged object on the upper surface and get close to the electric power transmission coil. Upon charging, when the to-be-charged object is placed onto the plate member, because the plate member is displaced to the second position and gets close to the electric power transmission coil, the alternating magnetic field from the electric power transmission coil reaches the to-be-charged object across the plate member disposed in between; thereby the to-be-charged object is charged. At the time of non-charging, because the plate member is disposed at the first position, approach of a foreign metallic substance to the electric power transmission coil is restrained by the plate member; thus abnormal temperature rise of the foreign metallic substance due to electromagnetic induction heating is restrained.

Also, the apparatus may be such that it further comprises a concave receiver section with an aperture opening upwards; that the electric power transmission coil is disposed so as to face the bottom face of the receiver section from the lower part; and that the plate member is configured so as to close at least part of the aperture at the first position, and so as to get close to the bottom face at the second position. At the time of non-charging, the plate member is disposed at the first position; thus invasion of a foreign metallic substance to the receiver section is restrained by the plate member. Upon charging, since the plate member is disposed at the second position, an alternating magnetic field reaches from the electric power transmission coil to a to-be-charged object across the plate member disposed in between; thereby the to-be-charged object is charged. Accordingly, approach of a foreign metallic substance to the electric power transmission coil is restrained by the plate member at the time of non-charging, so that abnormal temperature rise of the foreign metallic substance due to electromagnetic induction heating is restrained.

Further, it is preferred that the upper surface of the plate member is disposed horizontally at the second position. The to-be-charged object is placed onto the upper surface of the plate member. In the case where the upper surface of the plate member is disposed horizontally at the second position, degree of freedom in direction in the horizontal plane to place the to-be-charged object thereon increases.

Additionally, the apparatus may further comprise: a holding member that holds an electric power transmission coil and is freely displaceable between an upper side position at which the holding member is disposed horizontally and a lower side position at which the holding member is slanted in relation to the horizontal plane below the upper side position; and an interlocking mechanism that causes to displace the holding member from the upper side position to the lower side position as the plate member is displaced from the second position to the first position, and causes to displace the holding member from the lower side position to the upper side position as the plate member is displaced from the first position to the second position. At the time of non-charging, the plate member is disposed at the first position, and the holding member is disposed at the lower side position; so that the upper surface of the plate member along with the holding member are slanted in relation to the horizontal plane .
For this reason, a foreign metallic substance, when it happens to drop on the plate member, slides down therefrom to the outside of the charging apparatus; and even when the foreign metallic substance happens to pass through the plate member and drop onto the holding member, it slides down therefrom, too, because the holding member is slanted. In this manner, at the time of non-charging, approach of a foreign metallic substance to the electric power transmission coil is restrained by the plate member and the holding member. Also, upon charging, when the to-be-charged object is placed onto the plate member, because both the plate member and the holding member face with one another in horizontal states, an alternating magnetic field from the electric power transmission coil reaches the to-be-charged object across the plate member disposed in between; thereby the to-be-charged object is charged.

Moreover, the apparatus may be such that it further comprises a concave receiver section with an aperture opening upwards; that an electric power transmission coil is disposed so as to face the bottom face of the receiver section from the lower part; and that a plate member is configured so as to include two lid members of which root edge portions are supported via shafts respectively by mutually opposing edges of the aperture, and thus so as to take a mountain shape at the first position with the lid members making contact with each other at each head edge portion above each root edge portion. So, at the time of non-charging, a foreign metallic substance, even when it happens to drop onto the plate member, slides from on the plate member taking the mountain shape down to the outside of the charging apparatus. Accordingly, at the time of non-charging, approach of a foreign metallic substance to the electric power transmission coil is restrained by the plate member; thus abnormal temperature rise of the foreign metallic substance due to electromagnetic induction heating is restrained.

Also, it is preferred that the bottom face of the receiver section is horizontal.

When a to-be-charged object is placed on the bottom face of the receiver section, in the case where the bottom face of the receiver section is horizontal, degree of freedom in direction in the horizontal plane to place the to-be-charged object thereon increases. Further, in a case where the bottom face of the receiver section is horizontal and an axial direction of the electric power transmission coil is perpendicular to the bottom face, the alternating voltage, attributable to electromagnetic induction, induced in the power reception coil of the to-be-charged object by an alternating magnetic field generated from the electric power transmission coil increases. In this manner, charging efficiency increases.

### Effects of the Invention

According to the present invention, because the upper surface of the plate member is slanted in relation to the horizontal plane when the plate member is at the first position, even when a foreign metallic substance happens to drop onto the plate member, it is enabled that the foreign metallic substance slides from on the plate member down to outside of the charging apparatus. For this reason, approach of a foreign metallic substance to the electric power transmission coil can be restrained by the plate member; so that abnormal temperature rise of the foreign metallic substance due to electromagnetic induction heating can be restrained.

### Brief Description of the Drawings

Fig. 1 is a sectional view of a contactless charging apparatus at the time of non-charging according to the first embodiment of the present invention.
Fig. 2 is a sectional view of the contactless charging apparatus at the time of (upon) charging.
Fig. 3 is a block diagram showing an electrical configuration of the contactless charging apparatus.
Fig. 4A is a sectional view of a contactless charging apparatus at the time of non-charging according to the second embodiment, and Fig. 4B is a sectional view thereof at the time of (upon) charging.
Fig. 5A is a sectional view of a contactless charging apparatus at the time of non-charging according to the third embodiment, and Fig. 5B is a sectional view thereof at the time of (upon) charging.
Fig. 6A is a sectional view of a contactless charging apparatus at the time of non-charging according to the fourth embodiment, and Fig. 6B is a sectional view thereof at the time of (upon) charging.

### Explanation of Reference Numbers

- [0017] 10,10A, 10B, 10C: contactless charging apparatus
- 20,20A, 20B, 20C: housing
- 21, 21C: housing upper surface
- 22, 22C: aperture
- 23, 23C: receiver section
- 24, 24C: bottom face
- 25: extended portion
- 27A, 27B: concavity
- 30,30A, 30B, 30C: plate member
- 31,31A, 31B: upper surface
- 35A: first gear (interlocking mechanism)
- 36B: rack section (interlocking mechanism)
- 37C, 38C: lid member
- 371C, 381C: root edge portion
- 372C, 382C: head edge portion
- 373C, 383C: upper surface
- 40: supporting member
- 50, 50A, 50B: spring
- 60,60A, 60B, 60C: electric power transmission coil
- 61: oscillator circuit
- 70A, 70B: holding member
- 72A: second gear (interlocking mechanism)
- 72B: pinion (interlocking mechanism)
- 100: to-be-charged object
- 103: power reception coil

### Best Mode for Carrying Out the Invention

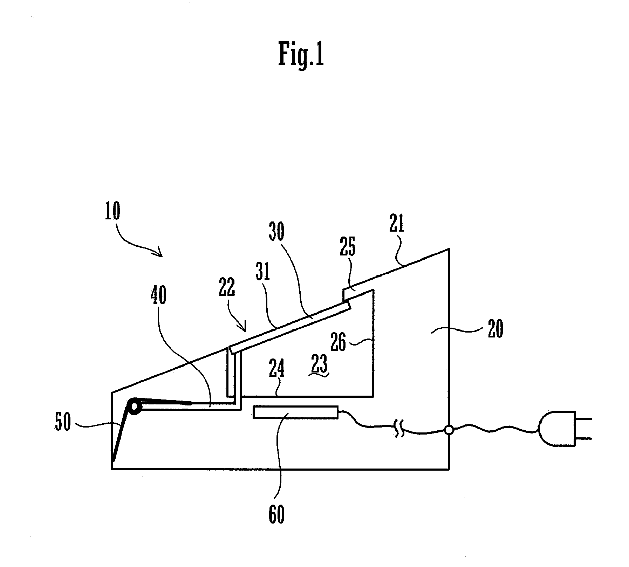

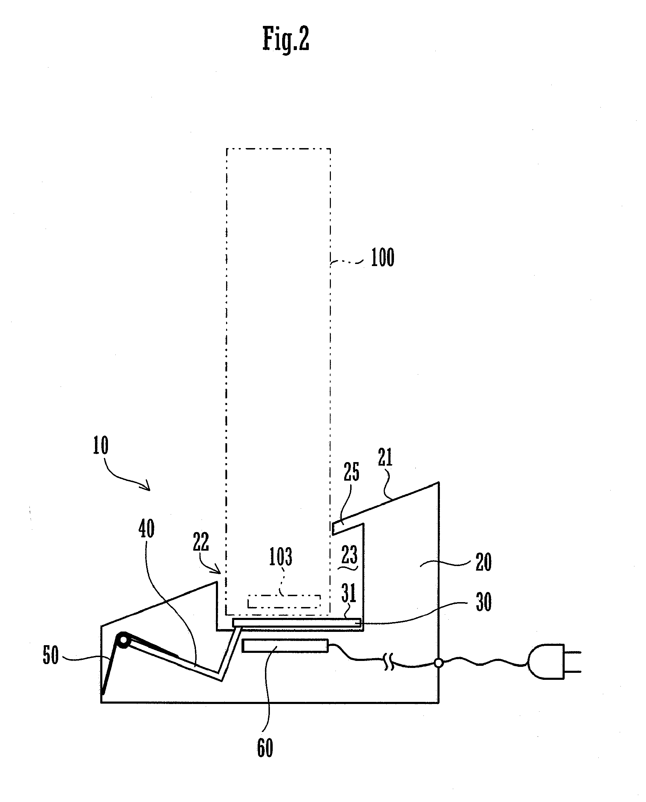

In the following, referring to the drawings, best modes for carrying out the invention are explained. Fig. 1 is a sectional view of a contactless charging apparatus 10 at the time of non- charging according to the first embodiment of the present invention. FIG. 2 is a sectional view of the contactless charging apparatus 10 at the time of (upon) charging. In Fig. 1 and Fig. 2, sectional notations of cut surfaces are omitted.

A contactless charging apparatus 10 is used, for example, as a charging apparatus for charging a portable handset of a cordless telephone. So is a portable handset of the cordless telephone an example of a to-be-charged object 100.

The charging apparatus 10 comprises a housing 20, a plate member 30, a supporting member 40, a spring 50 and an electric power transmission coil 60. The spring 50 corresponds to an urging member of the present invention.

The housing 20 includes a housing upper surface 21 that is slanted in relation to the horizontal plane. The housing 20 also includes a concave receiver section 23 with an aperture 22 opening upwards. It is preferred that a bottom face 24 of the receiver section 23 is horizontal.

The electric power transmission coil 60 is disposed in the housing 20 so as to face the bottom face 24 from the lower part. It is preferred that the electric power transmission coil 60 is disposed so that an axial direction thereof is perpendicular to the bottom face 24. The electric power transmission coil 60, when applied thereto an alternating voltage, generates an alternating magnetic field.

The plate member 30 is supported by a supporting member 40. The supporting member 40 in this embodiment appears L-shaped. As to the supporting member 40, one end portion thereof is fixed to the plate member 30, whereas the other end portion thereof is supported via a shaft by the housing 20. Thereby, the plate member 30 is caused to be freely displaceable between a predetermined first position as depicted in Fig. 1 and a predetermined second position as illustrated in Fig. 2. The spring 50 is, for example, a torsion spring, and thereby urges the plate member 30 from the second position toward the first position.

The first position is a position at which the plate member 30 is spaced from and above the electric power transmission coil 60. The plate member 30 is disposed at the first position at the time of non-charging. The plate member 30 at the first position closes at least part of the aperture 22. In this embodiment, the plate member 30 at the first position closes almost the whole aperture 22.

At least an upper surface 31 of the plate member 30 at the first position is slanted in relation to the horizontal plane. In this embodiment, the plate member 30 is of a uniform thickness. It is preferred that the upper surface 31 of the plate member 30 at the first position is disposed approximately in the same plane as that of the housing upper surface 21.

The housing 20 supports the plate member 30 via the shaft by way of the supporting member 40. A downstream portion of the housing 20 disposed in downstream side of the plate member 30 in direction of the slant of the plate member 30 does not protrude upwards in relation to the plate member 30 at the first position.

Because both the upper surface of the plate member 30 and the housing upper surface 21 are slanted in relation to the horizontal plane, even when a foreign metallic substance such as coin happens to drop either onto the plate member 30 or onto the housing upper surface 21, it is enabled that the foreign metallic substance slides either from on the plate member 30 or from on the housing upper surface down to outside of the charging apparatus 10. In this manner, approach of a foreign metallic substance to the electric power transmission coil 60 is restrained by the plate member 30.

In direction of the slant of the upper surface 31 of the plate member 30 and housing upper surface 21, an extended portion 25 extending toward downstream side is provided at an upper edge portion in the upstream side of the receiver section 23. It is preferred that in the direction that is perpendicular to direction of the slant of the upper surface 31, etc. (, i.e., the direction perpendicular to the page of Fig. 1), the dimension of the extended portion 25 is about the same as the dimension of the plate member 30. In direction of the slant of the upper surface 31 etc., the extended portion 25 is formed so as to cover a gap between an upstream side face 26 of the receiver section 23 and the plate member 30. By the extended portion 25, invasion of a foreign metallic substance to the receiver section 23 is restrained more securely, and then approach of the foreign metallic substance to the electric power transmission coil 60 is restrained more securely.

The second position, as shown in Fig. 2, is where the plate member 30 gets close to the bottom face 24 of the receiver section 23. With the plate member 30 at the second position, a to-be-charged object 100 is permitted to get close to the electric power transmission coil 60. When a to-be-charged object 100 is placed onto the plate member 30 for charging, the plate member 30, resisting a biasing force of the spring 50, is displaced to the second position by the weight of the to-be-charged object 100. Upon charging, the plate member 30 at the second position holds the to-be-charged object 100 on the upper surface 31.

Upon charging, when the to-be-charged object 100 is placed onto the plate member 30, because the plate member 30 is displaced to the second position and gets close to the electric power transmission coil 60, the alternating magnetic field from the electric power transmission coil 60 reaches the to-be-charged object 100 across the plate member 30 disposed in between; thereby the to-be-charged object 100 is charged.

It is preferred that the upper surface 31 of the plate member 30 is disposed horizontally at the second position. As stated above, the to-be-charged object 100 is placed onto the plate member 30 upon charging. In a case where a to-be-charged object 100 comprises a display section as with a portable handset of many a cordless telephone, it is preferred that the display section of the to-be-charged object 100 does not face downwards upon charging. If the upper surface 31 of the plate member 30 is disposed horizontally in the second position, then, even when the to-be-charged object 100 is turned to any direction in the horizontal plane, it is unlikely that the display section faces downwards. Accordingly, in the case where the upper surface 31 of the plate member 30 is disposed horizontally in the second position, then degree of freedom in direction in the horizontal plane to place the to-be-charged object 100 thereon increases.

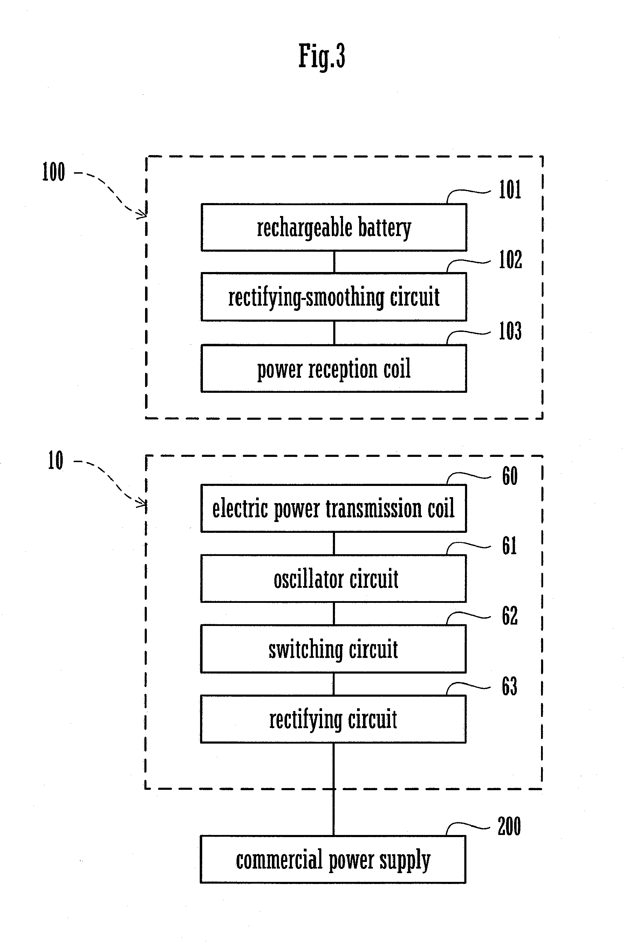

Fig.3 is a block diagram showing an electrical configuration of the contactless charging apparatus 10.

The charging apparatus 10 comprises an oscillator circuit 61, a switching circuit 62 and a rectifying circuit 63, in addition to the electric power transmission coil 60. The to-be-charged object 100 comprises a rechargeable battery 101, a rectifying-smoothing circuit 102 and a power reception coil 103.

The rectifying circuit 63 rectifies an alternating voltage supplied from a commercial power supply 200 to form a direct voltage, and outputs the direct voltage to the switching circuit 62. The switching circuit 62, detecting charging status of the rechargeable battery 101 of the to-be-charged object 100, outputs the direct voltage to the oscillator circuit 61 when the rechargeable battery 101 is not at a predetermined full charge status, and stops the output of the direct voltage to the oscillator circuit 61 when the rechargeable battery 101 becomes the predetermined full charge status.

The oscillator circuit 61 converts the direct voltage outputted from the switching circuit 62 into an alternating voltage, and outputs the alternating voltage to the electric power transmission coil 60 . The electric power transmission coil 60 generates an alternating magnetic field by the alternating voltage outputted from the oscillator circuit 61.

By the alternating magnetic field generated from the electric power transmission coil 60, an alternating voltage, attributable to electromagnetic induction, is induced in the power reception coil 103. The rectifying-smoothing circuit 102 rectifies and smoothes the alternating voltage induced to the power reception coil 103, and then charges the rechargeable battery 101.

As shown in Fig. 2, both the bottom face 24 of the receiver section 23 and the upper surface 31 of the plate member 30 at the second position are horizontal together, and the axial direction of the electric power transmission coil 60 is perpendicular to the bottom face 24. Therefore, it is most likely that the axial direction of the power reception coil 103 tends to be parallel to the axial direction of the electric power transmission coil 60. Accordingly, the alternating voltage, attributable to electromagnetic induction, induced to the power reception coil 103 of the to-be-charged object 100 by the alternating magnetic field generated from the electric power transmission coil 60 increases, and thus results in an increased charging efficiency.

With the charging apparatus 10, as described above, since the upper surface 31 of the plate member 30 is slanted in relation to the horizontal plane, a foreign metallic substance such as coin, even when it happens to fall onto the upper surface 31 of the plate member 30, slides down from on the plate member 30, and thus will not come into the receiver section 23. In this manner, approach of a foreign metallic substance to the electric power transmission coil 60 is restrained by the plate member 30. Accordingly, abnormal temperature rise of the foreign metallic substance due to electromagnetic induction heating is restrained.

Besides, even when the foreign metallic substance happens not to glide and happens to stop on the upper surface of the plate member 30, since the plate member 30 at the first position is spaced from the electric power transmission coil 60, electromagnetic induction heating will not occur; and thus abnormal temperature rise of the foreign metallic substance will not occur, either.

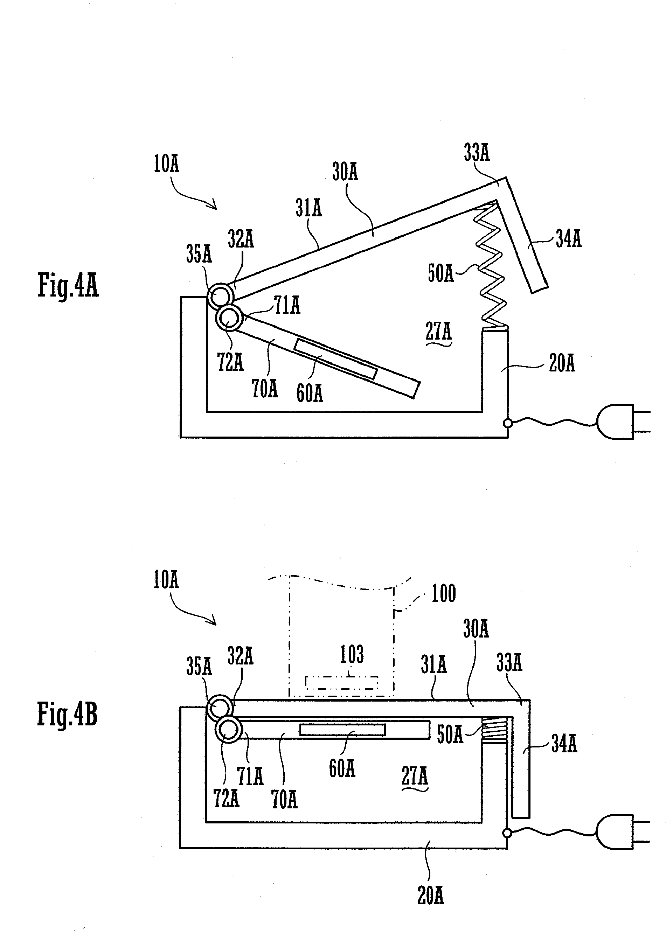

Fig. 4 (A) is a sectional view of a contactless charging apparatus 10A at the time of non-charging according to the second embodiment, and Fig. 4 (B) is a sectional view thereof at the time of (upon) charging. In Fig. 4 (A) and Fig. 4 (B), sectional notations of cut surfaces are omitted.

An electrical configuration of the charging apparatus 10A according to this embodiment is configured in the same manner as that of the charging apparatus 10.

In the charging apparatus 10A, a housing 20A includes a concavity 27A. A root edge portion 32A of a plate member 30A is supported via a shaft by an upper edge portion of the concavity 27A. The plate member 30A is caused to be freely displaceable between a first position shown in Fig. 4 (A) and a second position shown in Fig. 4 (B) . The plate member 30A is slanted in relation to the horizontal plane at the first position, and is disposed about horizontally at the second position.

To a head edge portion 33A, which is opposite side of the root edge portion 32A, of the plate member 30A is fixed one end of a spring 50A, and the other end of the spring 50A is fixed to an upper surface of an edge portion of the housing 20A. The plate member 30A is urged from a second position toward a first position by the spring 50A.

As the spring 50A, for example, a compression spring is used.

The head edge portion 33A of the plate member 30A is provided with a cover section 34A that extends downwards. The cover section 34A prevents a foreign metallic substance from invading to the concavity 27A from side direction.

To the root edge portion 32A of the plate member 30A is attached a first gear 35A. The first gear 35A rotates as the plate member 30A is displaced between the first position and the second position.

An electric power transmission coil 60A is held by a holding member 70A. A root edge portion 71A of the holding member 70A is, in the vicinity of the root edge portion 32A of the plate member 30A, supported via a shaft by the housing 20A. The holding member 70A is freely displaceable between an upper side position shown in Fig. 4 (B) and a lower side position shown in Fig. 4 (A). The holding member 70A is disposed about horizontally at the upper side position, and is slanted in relation to the horizontal plane at the lower side position below the upper side position.

To the root edge portion 71A of the holding member 70A is attached a second gear 72A. The second gear 72A rotates accompanied by the holding member 70A's displacement between the upper side position and the lower side position thereof. Since the first gear 35A and the second gear 72A are engaged with each other, displacement of the plate member 30A is accompanied by displacement of the holding member 70A. The first gear 35A and the second gear 72A correspond to an interlocking mechanism of the present invention.

As the plate member 30A is displaced from the second position to the first position, the holdingmember 70A is displaced from the upper side position to the lower side position correspondingly. Also, as the plate member 30A is displaced from the first position to the second position, the holding member 70A is displaced from the lower side position to the upper side position correspondingly.

At the time of non-charging, as shown in Fig. 4 (A), the plate member 30A is disposed at the first position, and the holding member 70A is disposed at the lower side position.

At the time of non-charging, both an upper surface 31A of the plate member 30A and the holding member 70A are slanted in relation to the horizontal plane. Therefore, a foreign metallic substance, even when it happens to drop onto the plate member 30A, slides from on the plate member 30A down to the outside of the charging apparatus 10A. Further, the foreign metallic substance, even when it happens to pass through the plate member 30A and drop onto the holding member 70A, slides down and off from on the holding member 70A, because the holding member 70A is slanted. In this manner, at the time of non-charging, approach of the foreign metallic substance to an electric power transmission coil 60A is restrained by the plate member 30A and the holding member 70A.

Upon charging, as shown in Fig. 4 (B), the plate member 30A is disposed at the second position, and the holding member 70A is disposed at the upper side position. Upon charging, when the to-be-charged object 100 is placed onto the plate member 30A, because both the plate member 30A and the holding member 70A are horizontally disposed facing each other, an alternating magnetic field from an electric power transmission coil 60A reaches the to-be-charged object 100 across the plate member 30A disposed in between; thereby the to-be-charged object 100 is charged.

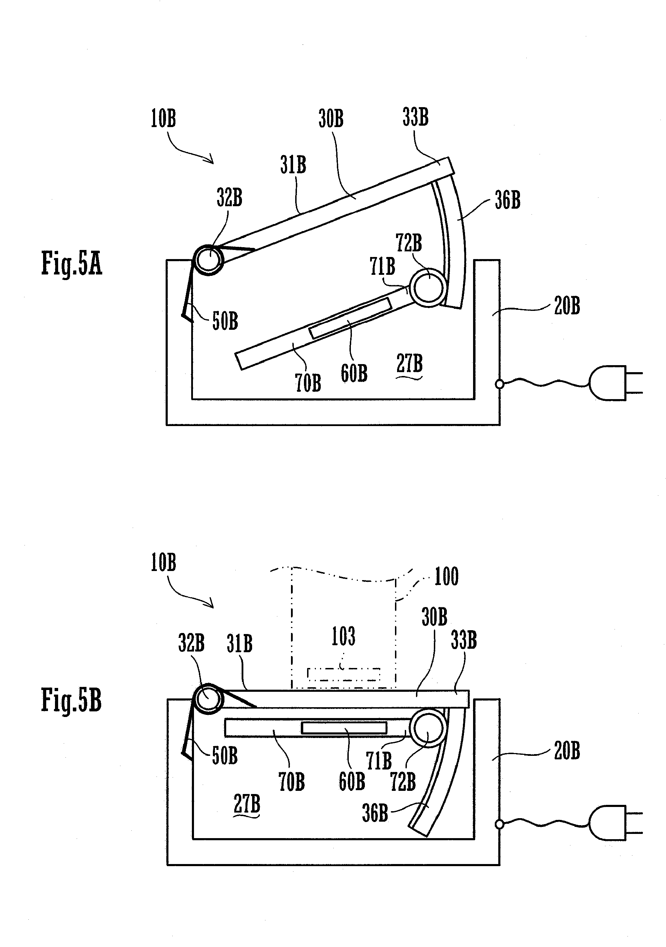

Fig. 5 (A) is a sectional view of a contactless charging apparatus 10B at the time of non-charging according to the third embodiment, and Fig. 5 (B) is a sectional view thereof at the time of (upon) charging. In Fig. 5 (A) and Fig. 5 (B), sectional notations of cut surfaces are omitted.

An electrical configuration of the charging apparatus 10B according to this embodiment is configured in the same manner as that of the charging apparatus 10.

In the charging apparatus 10B, a housing 20B includes a concavity 27B. A root edge portion 32B of a plate member 30B is supported via a shaft by an upper edge portion of the concavity 27B. The plate member 30B is caused to be freely displaceable between a first position shown in Fig. 5 (A) and a second position shown in Fig. 5 (B). The plate member 30B is slanted in relation to the horizontal plane at the first position, and is disposed about horizontally at the second position.

The plate member 30B is urged from the secondposition toward the first position by a spring 50B. As the spring 50B, for example, a torsion spring is used.

A head edge portion 33B, which is opposite side of the root edge portion 32B of the plate member 30B, is provided with a rack section 36B extending downwards. At a position, which is slightly lower than that of the root edge portion 32B of the plate member 30B and at which engagement with the rack section 36B is made, is disposed a pinion 72B. A root edge portion 71B of a holding member 70B is supported by the housing 20B via a shaft coaxially with a shaft for the pinion 72B. The pinion 72B and the holding member 70B are displaced unitedly. The rack section 36B and the pinion 72B correspond to an interlocking mechanism of the present invention.

The holding member 70B is freely displace able between an upper side position shown in Fig. 5 (B) and a lower side position shown in Fig. 5 (A). The holding member 70B is disposed about horizontally at the upper side position, and is slanted in relation to the horizontal plane at the lower side position below the upper side position.

As the plate member 30B is displaced from the second position to the first position, the holding member 70B is displaced from the upper side position to the lower side position correspondingly. Also, as the plate member 30B is displaced from the first position to the second position, the holding member 70B is displaced from the lower side position to the upper side position correspondingly.

At the time of non-charging, as shown in Fig. 5 (A), the plate member 30B is disposed at the first position, and the holding member 70B is disposed at the lower side position.

At the time of non-charging, both an upper surface 31B of the plate member 30B and the holding member 70B are slanted in relation to the horizontal plane. Therefore, a foreign metallic substance, even when it happens to drop onto the plate member 30B, slides from on the plate member 30B down to the outside of the charging apparatus 10B. Further, the foreign metallic substance, even when it happens to pass through the plate member 30B and drop onto the holding member 70B, slides down and off from on the holding member 70B, because the holding member 70B is slanted. In this manner, at the time of non-charging, approach of the foreign metallic substance to an electric power transmission coil 60B is restrained by the plate member 30B and the holding member 70B.

Upon charging, as shown in Fig. 5 (B), the plate member 30B is disposed at the second position, and the holding member 70B is disposed at the upper side position.
Upon charging, when the to-be-charged object 100 is placed onto the plate member 30B, because the plate member 30B and the holding member 70B are horizontally disposed facing each other, an alternating magnetic field from an electric power transmission coil 60B reaches the to-be-charged object 100 across the plate member 30B disposed in between; thereby the to-be-charged object 100 is charged.

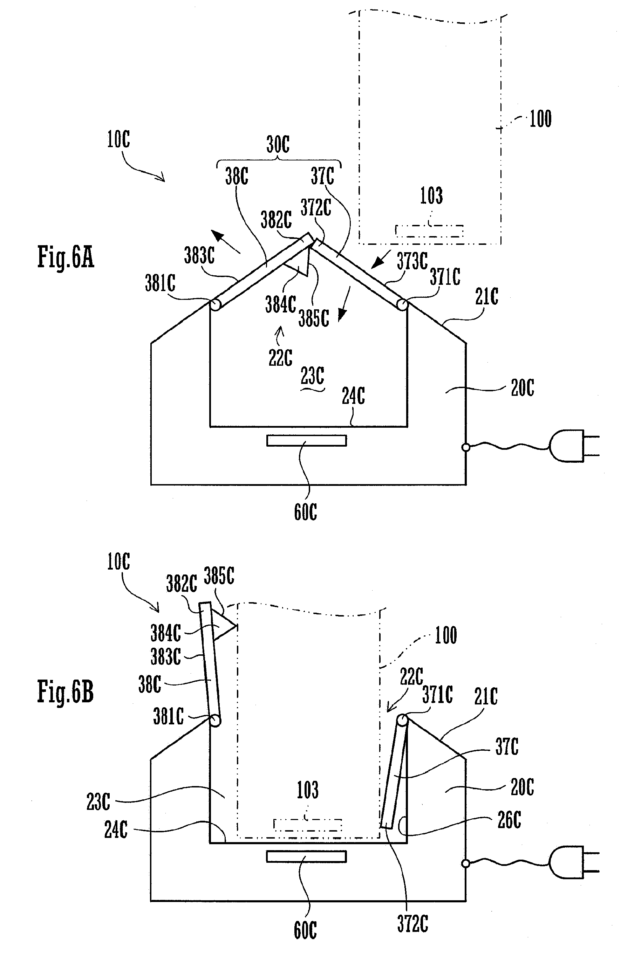

Fig. 6 (A) is a sectional view of a contactless charging apparatus 10C at the time of non-charging according to the fourth embodiment, and Fig. 6 (B) is a sectional view thereof at the time of (upon) charging. In Fig. 6 (A) and Fig. 6 (B), sectional notations of cut surfaces are omitted.

An electrical configuration of the charging apparatus 10C according to this embodiment is configured in the same manner as that of the charging apparatus 10.

In the charging apparatus 10C, a housing upper surface 21C of a housing 20C is slanted downwards from the centerline thereof to opposite sides, like a gable roof.
The housing 20C includes, in the middle part thereof, a concave receiver section 23C with an aperture 22C opening upwards.

A plate member 30C includes two lid members 37C, 38C. Root edge portions 371C, 381C of the lid members 37C, 38C are supported via shafts respectively by mutually opposing edges of the aperture 22C.

The lid members 37C, 38C are freely displaceable between a first position shown in Fig. 6 (A) and a second position shown in Fig. 6 (B). The lidmembers 37C, 38C, at the first position, make contact with each other at head edge portions 372C, 382C thereof at the opposite sides of and above the respective root edge portions 371C, 381C. Thereby, the plate member 30C at the first position takes a mountain shape. Each of upper surfaces 373C, 383C of the lid members 37C, 38C is slanted downwards and outwards.

The lid member 38C has a protruding portion 384C at an undersurface of the head edge portion 382C. The protruding portion 384C has a slant face 385C to the lid member 37C's side. When the lid members 37C, 38C are at the first position, the slant face 385C is in contact with the head edge portion 372C of the lid member 37C at a predetermined angle.

The lid member 37C at the second position gets close to an inside surface 26C of the receiver section 23C. The second position of the lid member 38C is configured so as to be outside of the receiver section 23C.

The lid members 37C, 38C are urged from the second positions toward the first positions respectively by respective urging members that are not illustrated. As the urging member of the charging apparatus 10C, for example, a torsion spring is used.

The to-be-charged object 100, depressing the lid member 37C downwards, is placed into the receiver section 23C. When the lid member 37C is depressed downwards, the head edge portion 372C of the lid member 37C slides on the slant face 385C of the protruding portion 384C; thereby a force directed toward the second position is transmitted from the lid member 37C to the lid member 38C. Then, the lid member 37C is displaced from the first position to the second position by the weight of the to-be-charged object 100, whereas the lid member 38C is displaced from the first position to the second position by the force transmitted from the lid member 37C.

At the time of non-charging, as shown in Fig. 6 (A), the plate member 30C is disposed at the first position; then because the upper surface of the plate member 30C takes the mountain shape, a foreign metallic substance, even when it happens to drop onto the plate member 30C, is secured to slide from on the plate member 30C down to the outside of the charging apparatus 10C. Accordingly, approach of the foreign metallic substance to an electric power transmission coil 60C is restrained by the plate member 30C at the time of non-charging; thereby abnormal temperature rise of the foreign metallic substance due to electromagnetic induction heating is restrained.

Upon charging, as shown in Fig. 6 (B), the plate member 30C is disposed at the second position, and the to-be-charged object 100 is placed into the receiver section 23C. Upon charging, the to-be-charged object 100 is placed into the receiver section 23C; then because an electric power transmission coil 60C and the power reception coil 103 face each other, an alternating magnetic field from the electric power transmission coil 60C reaches the power reception coil 103; thereby the to-be-charged object 100 is charged.

It is preferred that a bottom face 24C of the receiver section 23C is horizontal.
When the to-be-charged object 100 is placed onto the bottom face 24C of the receiver section 23C, if the bottom face 24C of the receiver section 23C is horizontal, degree of freedom in direction in the horizontal plane to place the to-be-charged object 100 thereon increases. Further, in a case where the bottom face 24C of the receiver section 23C is horizontal and an axial direction of the electric power transmission coil 60C is perpendicular to the bottom face 24C, an alternating voltage, attributable to electromagnetic induction, induced to the power reception coil 103 of the to-be-charged object 100 by the alternating magnetic field generated from the electric power transmission coil 60C increases, and thus results in an increased charging efficiency.

By way of conclusion, the above explanation of the embodiments is nothing more than illustrative in any respect, nor should be thought of as restrictive. Scope of the present invention is indicated by claims rather than the above embodiments. Further, it is intended that any modifications thereof that are equivalent to a claim in the sense and realm of the doctrine of equivalence be included within the scope of the present invention.

## Claims

1. A contactless charging apparatus for charging a to-be-charged object by means of electromagnetic induction, comprising:
an oscillator circuit;
an electric power transmission coil that generates an alternating magnetic field by an alternating voltage outputted from said oscillator circuit;
a plate member that is freely displaceable between a first position at which the plate member is spaced from and above said electric power transmission coil and a second position at which said to-be-charged object is permitted to get close to said electric power transmission coil, wherein at least the upper surface of the plate member at the first position is slanted in relation to the horizontal plane;
a housing that supports said plate member via a shaft, wherein a downstreamportion of the housing disposed in downstream side from said plate member in direction of the slant of said plate member does not protrude upwards in relation to said plate member at the first position; and
an urging member that urges said plate member from said second position toward said first position and displaces said plate member to said second position by the weight of said to-be-charged object; wherein
the contactless charging apparatus charges said to-be-charged object with said plate member at said second position.

2. The contactless charging apparatus as claimed in claim 1, wherein said plate member, upon charging, in said second position, holds said to-be-charged object on said upper surface, and gets close to said electric power transmission coil.

3. The contactless charging apparatus as claimed in claim 2 further comprising a concave receiver section with an aperture opening upwards, wherein
said electric power transmission coil is disposed so as to face a bottom face of said receiver section from the lower part; and
said plate member closes at least part of said aperture at said first position, and gets close to said bottom face at said second position.

4. The contactless charging apparatus as claimed in claim3, wherein said upper surface of said plate member is disposed horizontally at said second position.

5. The contactless charging apparatus as claimed in claim 2 further comprising:
a holding member that holds said electric power transmission coil, wherein the holding member is freely displaceable between an upper side position at which the holding member is disposed horizontally and a lower side position at which the holding member is slanted in relation to the horizontal plane below said upper side position; and
an interlocking mechanism that causes said holding member to be displaced from said upper side position to said lower side position in correspondence with the displacement of said plate member from said second position to said first position, and causes said holding member to be displaced from said lower side position to said upper side position in correspondence with the displacement of said plate member from said first position to said second position.

6. The contactless charging apparatus as claimed in claim 1 further comprising a concave receiver section with an aperture opening upwards; wherein,
said electric power transmission coil is disposed so as to face a bottom face of said receiver section from the lower part; and
said plate member includes two lid members of which root edge portions are supported respectively via the shafts by mutually opposing edges of said aperture, wherein said plate member at said first position takes a mountain shape with each head edge portion of said lid members making contact with each other above each said root edge portion of said lid members.

7. The contactless charging apparatus as claimed in claim 6 wherein said bottom face is horizontal.
